# EUROPÄISCHE PATENTSCHRIFT

(11) **EP 2 927 487 B1**
(45) Veröffentlichungstag und Bekanntmachung des Hinweises auf die Patenterteilung: **07.08.2019**
(21) Anmeldenummer: 15000928.0
(22) Anmeldetag: 30.03.2015
(51) Int. Cl.: H02G 15/14

(54) **ABSTANDSHALTEEINRICHTUNG**
DISTANCE PIECE
DISPOSITIF D'ÉCARTEMENT

(30) Priorität: 05.04.2014 DE 102014004931
(43) Veröffentlichungstag der Anmeldung: 07.10.2015
(73) Patentinhaber: HYDAC Accessories GmbH, 66280 Sulzbach/Saar (DE)
(72) Erfinder: Hiß, Helmut, 75228 Ispringen (DE); Schmitt, Martin, 66917 Knopp-Labach (DE)
(74) Vertreter: Bartels und Partner, Patentanwälte

(56) Entgegenhaltungen:
- EP-A1- 1 744 089
- EP-A2- 2 618 437
- WO-A1-2009/068896
- DE-A1-102012 001 408
- NL-C1- 1 024 836
- US-A1- 2009 026 328

## Beschreibung

Die Erfindung betrifft ein Befestigungssystem mit den Merkmalen des Oberbegriffs von Patentanspruch 1.

Bei der heutigen umfassenden Verbreitung von Leitungssystemen, insbesondere elektrischen Übertragungssystemen, müssen häufig Kabel, anstatt sie in ungeordneten Bündeln, den sog. Kabelbäumen, zu führen, in definierten Lagebeziehungen zueinander geführt und gehalten werden. Dies ist aus Sicherheitsgründen insbesondere bei höher belasteten, energieführenden Stromkabeln der Fall, wie sie beispielsweise bei Windkraftanlagen durch den Turm vom Maschinenhaus nach unten geführt werden. Im Stand der Technik sind hierfür beispielsweise Befestigungssysteme bekannt, wie sie in DE 10 2012 001 408 A1 gezeigt sind, bei denen an einer sternförmigen Trägerstruktur Strangdurchführungen gebildet sind, durch die Stromkabel in geordneter räumlicher Zuordnung zueinander geführt sind, die im Turm vertikal verlaufen.

DE 10 2012 001 408 A1 offenbart ein gattungsgemäßes Befestigungssystem für energieführende Leitungen, insbesondere Stromkabel bei Windkraftanlagen, mit einer Trägerstruktur und mindestens einem daran festlegbaren Haltekörper, der eine Strangdurchführung mit einem muldenförmigen Aufnahmeraum aufweist und mit seinen Wandteilen Anlageflächen für durch die Strangdurchführung geführte Leitungen bildet.

Vorrichtungen unterschiedlichster Art zur Bündelung und Befestigung von energieführenden Leitungen sind aus EP 1 744 089 A1, NL 1024836 C, EP 2 618 437 A2, WO 2009/068896 A1 und DE 20 2008 002 786 U1 bekannt.

Ausgehend von diesem Stand der Technik stellt sich die Erfindung die Aufgabe, ein Befestigungssystem zur Verfügung zu stellen, das es auf einfache und sichere Weise ermöglicht, energieführende Leitungen, die in geordneter Lagebeziehung zueinander geführt werden müssen, in vorgegebenen Abständen voneinander zu halten.

Erfindungsgemäß ist diese Aufgabe durch ein Befestigungssystem gelöst, das die Merkmale des Patentanspruchs 1 in seiner Gesamtheit aufweist.

Gemäß dem Kennzeichen von Patentanspruch 1 ist vorgesehen, dass der jeweilig Haltekörper mit einer Abstandshalteeinrichtung ausgerüstet ist mit mindestens einem Abstandskörper, der eine dreiflügelige Grund-Querschnittsform aufweist und zwischen den Leitungen im jeweiligen Aufnahmeraum zentral angeordnet mittels Anlagestegen die energieführenden Leitungen in vorgegebenen Abständen voneinander hält, und mit mindestens einer Halteeinrichtung zum Festlegen des jeweiligen Abstandskörpers an einer der genannten Leitungen.

Die Erfindung sieht demgemäß mindestens einen Abstandskörper mit Anlagestegen vor, die die betreffenden Leitungen, wie Stromkabel, in den vorgegebenen Abständen voneinander halten, wobei mindestens eine Halteeinrichtung zum Festlegen des jeweiligen Abstandskörpers an einer der genannten Leitungen vorgesehen ist. Dadurch, dass eine der Leitungen selbst über die am Abstandskörper befindliche Halteeinrichtung die Fixierung des Abstandskörpers übernimmt, ist mit besonders geringem baulichem Aufwand eine sichere Abstandshalteeinrichtung realisierbar.

Bei energieführenden Leitungen, wie bei Stromkabeln bei Windkraftanlagen, sind im Hinblick auf Betriebssicherheit und Netzsicherheit bei der Berechnung der Dimensionierung der Kabel die Normen IEC 60287 und IEC 60364-5-52 einzuhalten, anhand deren die maximale thermische Kabelbelastbarkeit zu berechnen ist. Bei dieser Kalkulation der maximalen Strombelastung ist die waagerechte Verlegungsart der Kabel zugrunde gelegt. Ausgehend hiervon kommen, je nach Gegebenheiten, Korrekturfaktoren in Betracht, beispielsweise bei vertikaler Einbausituation, wie es bei Kabelführungen im Turm von Windkraftanlagen der Fall ist, wobei sich eine bessere Wärmeabfuhr gegenüber der horizontalen Anordnung ergibt. Weiterhin gelten Korrekturfaktoren bei drei AC-Einzelkabeln in Abhängigkeit vom Abstand der Kabel bei einer Kleeblattanordnung, wie es in der Regel bei Windkraftanlagen der Fall ist. Um zu einem möglichst optimalen Korrekturfaktor zu gelangen, ist bei einer besonders vorteilhaften Ausführungsform des erfindungsgemäßen Befestigungssystems die Anordnung derart getroffen, dass der jeweilige Abstandskörper eine wärmeabführende Einrichtung aufweist. Dadurch, dass zusätzlich zu der bei beabstandeten Kabeln erfolgenden natürlichen Kühlung mittels des Abstandskörpers eine weitere Kühlwirkung zur Verfügung steht, ergibt sich eine weitere Verbesserung des Korrekturfaktors, so dass in vorteilhafter Weise kleinere Kabelquerschnitte benutzt und damit der Materialeinsatz gemindert werden kann.

Bei besonders vorteilhaften Ausführungsbeispielen ist im jeweiligen Abstandskörper mindestens ein eine Luftführung bildender, in Axialrichtung der Leitungen durchgehender Hohlraum vorgesehen. Bei einer Vertikalführung der Leitungen, wie beispielsweise im Turm betreffender Windkraftanlagen, führt eine Art Kaminwirkung der jeweiligen Luftführung zu einem hohen Durchsatz an aus der Umgebung stammender Kühlluft mit entsprechend hoher Wärmeabfuhr und einer entsprechend höheren maximalen Strombelastbarkeit.

In besonders vorteilhafter Weise kann die Anordnung derart getroffen sein, dass der Abstandskörper Anlagestege aufweist, die sich von einem Zentralteil in radialer Richtung im Winkel zueinander erstrecken und in denen zumindest ein Hohlraum eine in Axialrichtung der anliegenden Leitungen verlaufende Luftführung bildet. Der Abstandskörper bildet dadurch an jedem der anliegenden Stromkabel eine einer Luftführung zugeordnete Kühlfläche mit entsprechend guter Kühlwirkung.

Eine besonders hohe Kühlwirkung ist erreichbar, wenn der Zentralteil des Abstandskörpers die Form eines runden, eine axiale Luftführung bildenden Rohrkörpers besitzt und dadurch eine Art zentral gelegenen Kühlluftkamin bildet.

Für drei in Kleeblattanordnung geführte Kabel können am Abstandskörper drei im Winkel von je 120° zueinander verlaufende Anlagestege mit je einem oder zwei, Luftführungen bildenden Hohlräumen vorgesehen sein. Die Anlagestege brauchen nicht gleich lang ausgebildet zu sein, beispielsweise können zwei Anlagestege mit jeweils zwei Hohlräumen und ein dritter, radial kürzerer, mit einem Hohlraum vorgesehen sein.

Hinsichtlich der Ausbildung der Halteeinrichtung kann die Anordnung mit Vorteil so getroffen sein, dass die Halteeinrichtung zur Bildung einer Clipsverbindung mit einer Leitung nachgiebige Zungen aufweist, die von entgegengesetzten Randbereichen von an den Anlagestegen gebildeten Abstandshalteflächen weg derart vorspringen, dass sie eine eingeclipste Leitung teilweise umgreifen. Dadurch ist eine baulich besonders einfach gestaltete Halteeinrichtung gebildet, die, als Clipsverbindung, eine besonders einfache und bequeme Montage ermöglicht.

Mit besonderem Vorteil können die nachgiebigen Zungen zueinander axial versetzt angeordnet sein, so dass eine kippsichere Verbindung mit der Leitung gebildet ist.

Hinsichtlich der Ausbildung der Halteeinrichtung kann die Anordnung mit Vorteil auch derart getroffen sein, dass die zwischen den Anlagestegen gebildeten muldenartigen Abstandshalteflächen in dem an den rohrförmigen Zentralteil angrenzenden Muldengrund endseits axiale Vorsprünge aufweisen, und dass die Halteeinrichtung rohrschellenartige Spannbänder, vorzugsweise Kabelbinder, aufweist, die über zwei einander enggegengesetzte Vorsprünge des Abstandskörpers und über eine betreffende Leitung geführt sind.

Bei besonders vorteilhaften Ausführungsbeispielen sind am Abstandskörper Fixiermittel zur Bildung einer Sicherung gegen Axialverschiebung relativ zu einem Befestigungssystem vorgesehen, das zur Festlegung energieführender Leitungen Strangdurchführungen aufweist, in denen der betreffende Abstandskörper angeordnet ist.

Hierbei können als Fixiermittel Fortsätze vorgesehen sein, die von einander axial entgegengesetzten Enden muldenartiger Abstandshalteflächen radial vorspringen und mit einander axial entgegengesetzten Wänden einer zugeordneten Strangdurchführung des jeweiligen Haltekörpers in formschlüssigen Sicherungseingriff kommen.

Alternativ oder zusätzlich können an den Anlagestegen des Abstandskörpers gebildete, radial vorstehende Rippen für einen Formschluss mit entsprechenden Rippen an der Wand einer betreffenden Strangdurchführung eines zugeordneten Haltekörpers und/oder für die Anlage an einer Umhüllung der betreffenden Leitungen vorgesehen sein.

Anstelle von einstückigen, aus Kunststoff spritzgeformten Abstandskörpern können Abstandskörper vorgesehen sein, die aus Teilkörpern zusammengesetzt sind. Der für den Formvorgang erforderliche Aufwand lässt sich dadurch verringern, so dass eine rationellere und kostengünstigere Fertigung möglich ist.

Mit besonderem Vorteil können die Teilkörper als Gleichteile ausgebildet sein, die an einem gestuften Anlagebereich aneinander anliegen. Der gestufte Anlagebereich bildet dabei eine Sicherung gegen relative Verschiebebewegungen. Für eine besonders sichere Fixierung der Abstandskörper an einer betreffenden Leitung durch eine beidseitige Verclipsung mit der Leitung können an beiden dem Anlagebereich entgegengesetzten Enden jedes Teilkörpers Haltezungen der Halteeinrichtung vorgesehen sein.

Mit Vorteil können ferner als Fixiermittel zur Sicherung gegen Axialverschiebung Flügelteile vorgesehen sein, die, zu den Haltezungen fluchtend, von den Rundbögen der Anlagestege radial vorspringen.

Für eine Befestigung der Teilkörper aneinander kann im Zentralbereich zwischen den Anlagestegen ein Hülsenkörper ausgebildet sein, der eine Bohrung für eine die Teilkörper aneinanderhaltende Verbindungsschraube aufweist. Es versteht sich, dass die Teilkörper auch anderweitig aneinander befestigt sein können, beispielsweise durch Verkleben.

Befestigungssysteme des Standes der Technik, wie sie für einen Einsatz bei Windkraftanlagen beispielhaft in den Dokumenten DE 10 2012 001 408 A1 oder DE 10 2012 001 407 A1 aufgezeigt sind, weisen Haltekörper auf, die an einer vorzugsweise in der Art eines Sternkörpers ausgebildeten Trägerstruktur festlegbar sind und eine Strangdurchführung mit einem muldenförmigen Aufnahmeraum aufweisen, der mit Wandteilen Anlageflächen für durch die jeweilige Strangführung geführte Leitungen aufweist. Ausgehend von diesem Stand der Technik ist bei dem erfindungsgemäßen Befestigungssystem für die Zusammenwirkung mit einer erfindungsgemäß ausgebildeten Abstandshalteeinrichtung an den Wandteilen des jeweiligen Aufnahmeraums vorteilhafterweise mindestens eine vorstehende Rippe vorgesehen, die sich zur Längsachse der betreffenden Leitungen senkrecht erstreckt. Dadurch ist in Zusammenwirkung mit am Abstandskörper der Abstandshalteeinrichtung radial vorstehenden Rippen ein Formschluss zur axialen Fixierung des jeweiligen Abstandskörpers im Aufnahmeraum der Strangführung ausbildbar.

Nachstehend ist die Erfindung anhand von in der Zeichnung dargestellten Ausführungsbeispielen im Einzelnen erläutert.
Es zeigen:
- Fig. 1: ein gattungsgemäßes Befestigungssystem gemäß dem Stand der Technik, das zur Führung und/oder Festlegung energieführender Stromkabel bei Windkraftanlagen vorgesehen ist, dargestellt in Draufsicht und ohne angebrachte Stromkabel;
- Fig. 2: eine näherungsweise in natürlicher Größe einer praktischen Ausführungsform gezeichnete Vorderansicht eines einzelnen Haltekörpers für ein erfindungsgemäßes Befestigungssystem mit einem Ausführungsbeispiel der erfindungsgemäß ausgebildeten Abstandshalteeinrichtung bei drei im Haltekörper eingelegten Stromkabeln;
- Fig. 3: eine schematische Darstellung, die lediglich die Querschnittsform eines Ausführungsbeispiels des Abstandskörpers der erfindungsgemäß ausgebildeten Abstandshalteeinrichtung zeigt, ohne dem Abstandskörper zugehörige Halteeinrichtung;
- Fig.4: eine perspektivische Schrägansicht eines Ausführungsbeispiels des Abstandskörpers mit der Querschnittsform von Fig. 3 und mit einer Halteeinrichtung zur Bildung einer Clipsverbindung;
- Fig. 5: eine Schrägansicht einer weiteren Ausführungsform des Abstandskörpers mit der Querschnittsform von Fig. 3 und mit einer einen Kabelbinder aufweisenden Halteeinrichtung;
- Fig. 6: eine in kleinerem Maßstab gezeichnete Seitenansicht eines Haltekörpers mit eingelegten Stromkabeln und mit dem eingesetzten Abstandskörper von Fig. 5;
- Fig. 7: eine der Fig. 2 entsprechende Vorderansicht, jedoch versehen mit einem demgemäß abgewandelten Ausführungsbeispiel des Abstandskörpers;
- Fig. 8 und 9: eine perspektivische Schrägansicht bzw. Draufsicht des Abstandskörpers der in Fig. 7 vorgesehenen Ausführungsform;
- Fig. 10: eine der Fig. 6 ähnliche Seitenansicht eines Haltekörpers mit eingelegten Stromkabeln und eingesetztem Abstandskörper gemäß dem Ausführungsbeispiel von Fig. 7 bis 9;
- Fig. 11: eine perspektivische Schrägansicht eines einzelnen Haltekörpers mit eingelegten Stromkabeln und mit einem aus Teilkörpern zusammengesetztem Abstandskörper;
- Fig. 12: eine perspektivische Schrägansicht eines Teilkörpers, der zusammen mit einem als Gleichteil geformten weiteren Teilkörper den Abstandskörper für das Ausführungsbeispiel von Fig. 11 bildet;
- Fig. 13 und 14: perspektivische Schrägansichten des aus den Teilkörpern zusammengesetzten Abstandskörpers, gesehen auf Oberseite bzw. Unterseite;
- Fig. 15: eine Vorderansicht eines einzelnen Haltekörpers mit eingelegten Stromkabeln und mit eingesetztem, aus Teilkörpern gebildetem Abstandskörper gemäß einer weiteren Ausführungsform;
- Fig. 16: in größerem Maßstab die Querschnittsform des weiter abgewandelten, zusammengesetzten Abstandskörpers;
- Fig. 17: eine der Fig. 12 ähnliche perspektivische Schrägansicht eines Teilkörpers der abgewandelten Ausführungsform, gesehen auf die Unterseite; und
- Fig. 18: eine der Fig. 10 entsprechende Seitenansicht eines Haltekörpers mit eingelegten Stromkabeln und eingesetztem Abstandskörper gemäß den Ausführungsbeispielen von Fig. 11 bis 17.

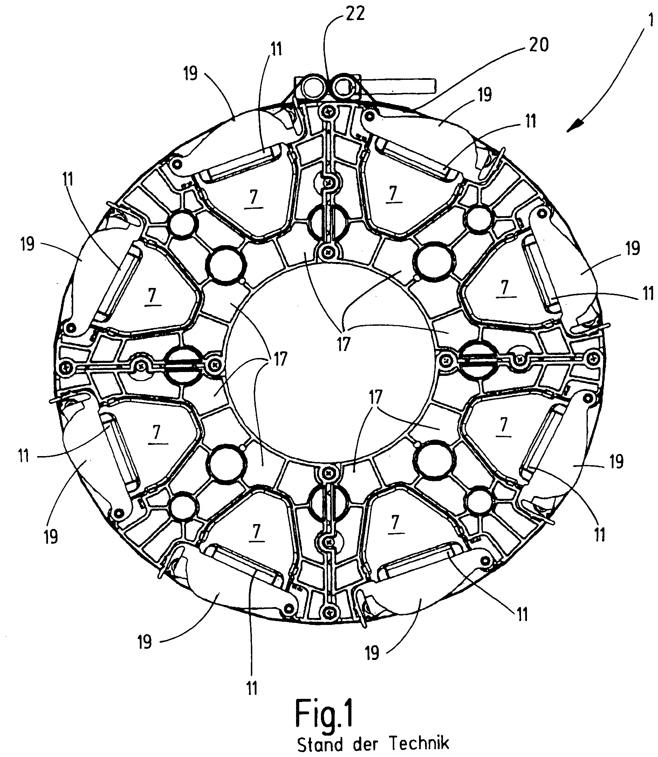

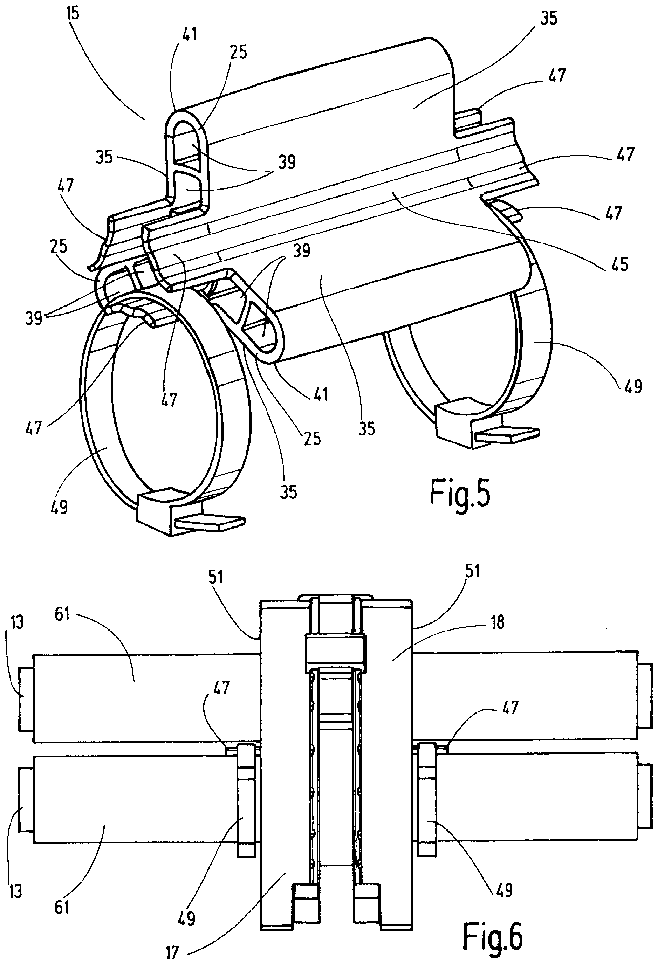

Die Fig. 1 zeigt ein Befestigungssystem der aus den Dokumenten DE 10 2012 001 408 A1 oder DE 10 2012 001 407 A1 bekannten Gattung. Befestigungssysteme dieser Art sind mit einer erfindungsgemäß ausgebildeten Abstandshalteeinrichtung ausrüstbar. Die Fig. 1 zeigt ein solches, als Ganzes mit 1 bezeichnetes Befestigungssystem ohne in Aufnahmeräume eingelegte Stromkabel. Die mit 7 bezeichneten Aufnahmeräume sind, wie bei den betreffenden Befestigungssystemen an sich bekannt, in muldenartiger Form in Haltekörpern 17 ausgebildet, die als Gleichteile aus Kunststoff spritzgeformt sind und in der Art eines Sternkörpers entlang einer gedachten Kreislinie aufeinanderfolgend angeordnet sind. Bei der Darstellung von Fig. 1 sind die Haltekörper 17, mit ihren Seitenwänden 18 (Fig. 6, 10, 11 und 18) aneinanderliegend, miteinander verbunden. Das radial äußere, offene Ende der Aufnahmeräume 7 ist mittels einer schwenkbaren Abdeckeinrichtung 19 verschließbar, die in Fig. 1 geschlossen dargestellt ist. In ebenfalls an sich bekannter Weise weisen die Abdeckeinrichtungen 19 ein federbelastetes, bewegbares Drückerteil 11 auf, das bei geschlossener Abdeckeinrichtung 19 an in den Aufnahmeraum 7 eingelegten Stromkabeln (in Fig. 1 nicht gezeigt) kraftschlüssig anliegt. Über die Außenseite der Abdeckeinrichtungen 19 ist ein Spannband 20 geführt, das mittels eines Spannschlosses 22 spannbar ist.

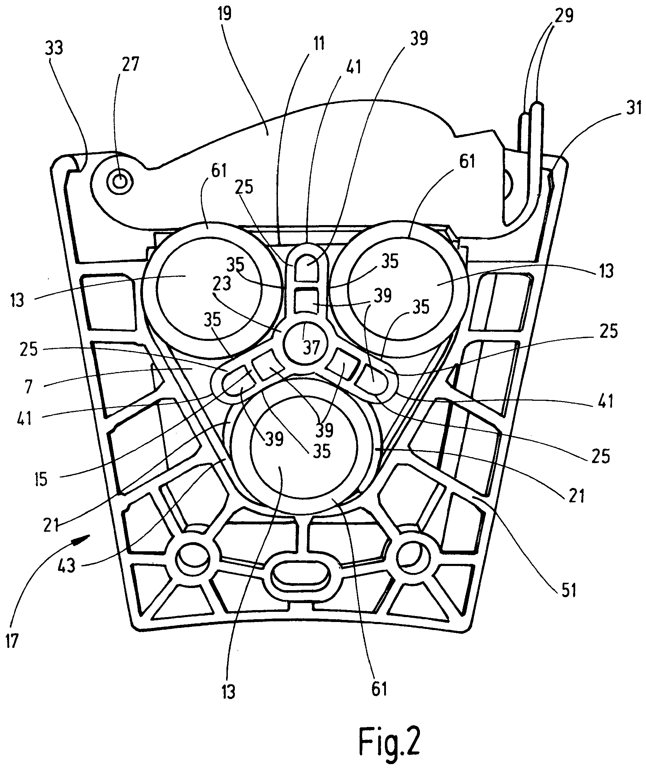

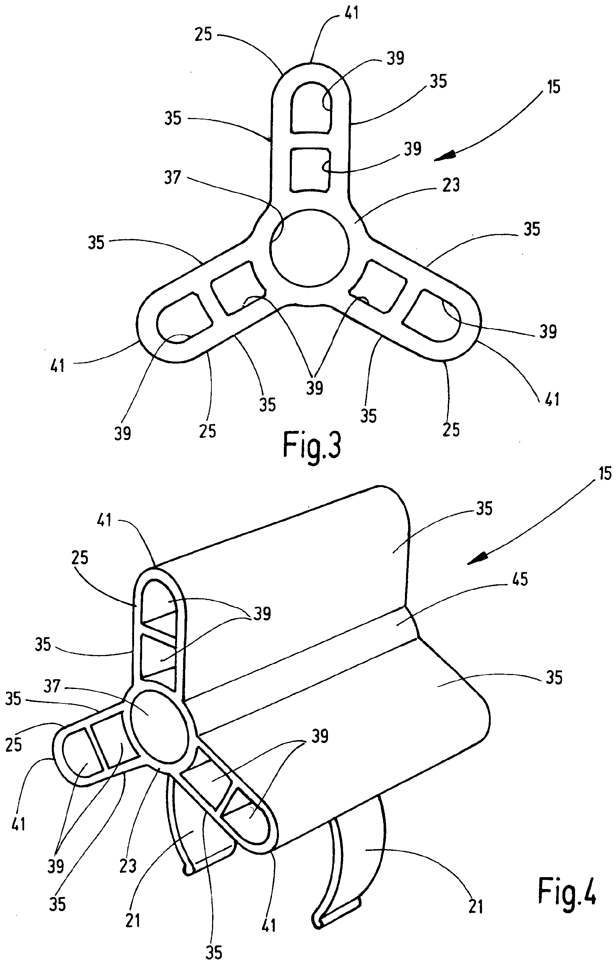

Die Fig. 2 zeigt einen einzelnen Haltekörper 17 für ein erfindungsgemäßes Befestigungssystem , wobei drei Stromkabel 13 in Kleeblattanordnung in den Aufnahmeraum 7 eingesetzt sind, und wobei der Haltekörper 17 des Befestigungssystems mit einer erfindungsgemäß ausgebildeten Abstandshalteeinrichtung ausgerüstet ist. Diese weist einen zwischen den Stromkabeln 13 zentral angeordneten Abstandskörper 15 auf, dessen dreiflügelige Grund-Querschnittsform in Fig. 3 (ohne zugehörige Halteeinrichtung) dargestellt ist. Die Fig. 4 zeigt den Abstandskörper 15 in perspektivischer Schrägdarstellung einschließlich einer durch zwei nachgiebige Zungen 21 gebildeten Halteeinrichtung, mittels deren der Abstandskörper 15 durch Verclipsen an einem Stromkabel 13 festlegbar ist, bei der Darstellung von Fig. 2 an dem im Aufnahmeraum 7 untenliegenden Stromkabel 13. Der Abstandskörper 15, der aus Kunststoff einstückig spritzgeformt ist, hat eine dreiflügelige Sternform, bei der von einem Zentralteil 23 ausgehend drei Anlagestege 25 ausgehen, die zueinander jeweils in einem Winkel von 120° angeordnet sind. Bei dem Ausführungsbeispiel von Fig. 2 bis 4 sind die Anlagestege 25 jeweils gleich lang in gleicher Form ausgebildet. Die axiale Gesamtlänge des Abstandskörpers 15 ist etwas größer als die axiale Abmessung eines betreffenden Haltekörpers 17, in dessen Aufnahmeraum 7 die Stromkabel 13 aufgenommen werden, die mittels des Abstandskörpers 15 im Abstand voneinander gehalten werden sollen. Die Fig. 2 zeigt den Montagezustand mit drei in Kleeblattanordnung in den Aufnahmeraum 7 eingelegten Stromkabeln 13, wobei die Abdeckeinrichtung 19 um ihr Schwenklager 27 in die Schließstellung geschwenkt und in dieser verrastet ist. Für eine lösbare Verrastung sind an dem dem Schwenklager 27 entgegengesetzten Ende der Abdeckeinrichtung 19 nachgiebige Rastzungen 29 mit Rastnasen 31 vorgesehen, die mit Gegenrasten 33 bei dem Montagezustand von Fig. 2 lösbar verrasten, bei dem das Drückerteil 11 der Abdeckeinrichtung 19 die beiden oberen Stromkabel 13 mit Federkraft beaufschlagt. Dabei liegt der Abstandskörper 15 mit Abstandshalteflächen 35, die sich zu beiden Seiten der Anlagestege 25 im Abstand voneinander und zueinander parallel erstrecken, an den Umhüllungen 61 der Stromkabel 13 an, wobei der Abstandskörper 15 mittels der nachgiebigen Zungen 21 verclipst ist, die als Halteeinrichtung für den Abstandskörper 15 das untere Stromkabel 13 teilweise umfassen.

Wie am deutlichsten aus Fig. 3 zu ersehen ist, ist das Zentralteil 23 des Abstandskörpers 15 als Hohlkörper gestaltet, der die Form eines runden Rohrkörpers besitzt, der eine kaminartig axial durchgehende Luftführung 37 bildet. Die Anlagestege 25 sind ebenfalls teilweise hohlkörperartig ausgebildet und weisen zwischen den seitlichen Abstandshalteflächen 35 Hohlräume 39 auf, die ebenfalls axial durchgehende Luftführungen bilden. Die Breite der Anlagestege 25 entspricht dem Rohrdurchmesser der Luftführung 37 im Zentralteil 23. Die Wandstärke der die Hohlräume 39 umgebenden Wand der Anlagestege 25 entspricht der Wandstärke des Rohrkörpers des Zentralteils 23. An den Enden der Anlagestege 25 sind die Abstandshalterflächen 35 jeweils über einen Rundbogen 41 verbunden.

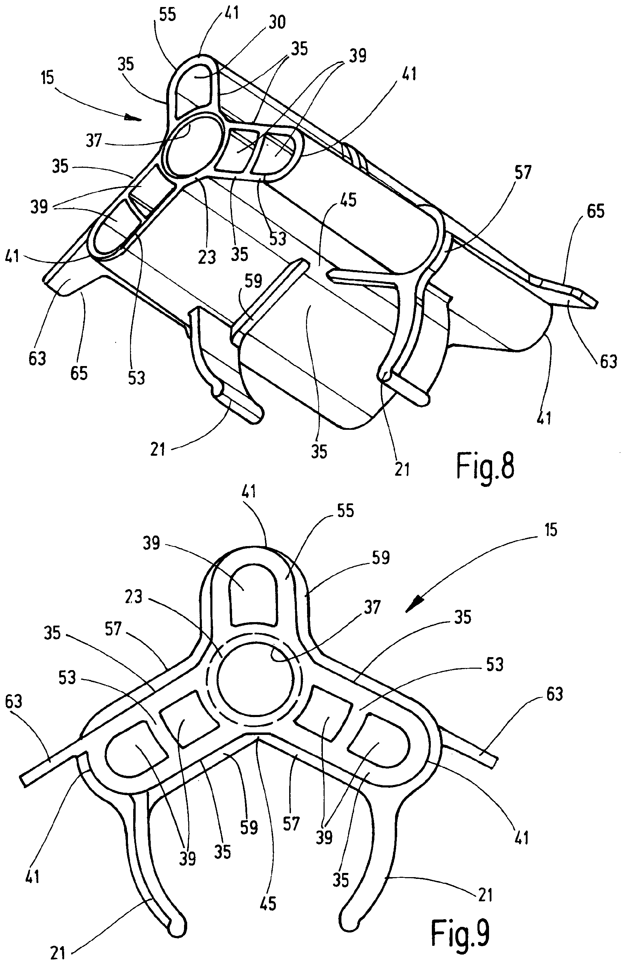

Die nachgiebigen, die Halteeinrichtung bildenden Zungen 21 sind am Abstandskörper 15 in Axialrichtung zueinander versetzt. Diese Versetzung ist in Fig. 8 augenfällig erkennbar, wie ein unten zu beschreibendes, zweites Ausführungsbeispiel des Abstandskörpers 15 zeigt. Der Haltekörper 17 des zugeordneten Befestigungssystems weist, wie der Fig. 2 entnehmbar ist, eine Rippe 43 auf, die einen aus der Innenwand des Aufnahmeraums 7 vorstehenden Vorsprung bildet, der sich senkrecht zur Längsachse der Stromkabel 13 über im Wesentlichen die gesamte Innenseite des Aufnahmeraums 7 erstreckt und sich im Zentralteil des Haltekörpers 17, bezogen auf die axiale Länge, befindet. Bei dieser Anordnung der nachgiebigen Zungen 21 des Abstandskörpers 15 und der Rippe 43 befindet sich beim Montagezustand von Fig. 2 die in der Figur linksseitig gelegene Zunge 21 hinter der Rippe 43, während die rechtsseitig gelegene Zunge 21 vor der Rippe 43 liegt. Die Zungen 21 bilden daher zusammen mit der Rippe 43 eine Verriegelung, die die Axialposition des Abstandskörpers 15 im Haltekörper 17 formschlüssig sichert.

Die Fig. 5 und 6 zeigen ein weiteres Ausführungsbeispiel mit abgewandelter Ausführungsform der Halteeinrichtung für den Abstandskörper 15. Dieser hat, was die Anlagestege 25, die zwischen diesen befindlichen, muldenartigen Abstandshalteflächen 35 sowie die im Zentralteil 23 gebildete Luftführung 37 und die Luftführungen bildenden Hohlräume 39 anbelangt, die gleiche Konfiguration wie beim Ausführungsbeispiel von Fig. 2 bis 4. Abweichend hiervon sind die Abstandshalteflächen 35 in dem entlang dem Zentralteil 23 verlaufenden Muldengrund 45 durch Vorsprünge 47 axial verlängert. Zur Bildung der Halteeinrichtung, die die nachgiebigen Zungen 21 des zuvor beschriebenen Beispiels ersetzt, sind über zwei einander entgegengesetzte Vorsprünge 47, die eine dem Muldengrund 45 entsprechende Wölbung aufweisen, ein ein Spannband bildender Kabelbinder 49 geführt, die das untere Stromkabel 13 umschlingen. Da, wie in Fig. 6 gezeigt, die Vorsprünge 47 über die den zugeordneten Haltekörper 17 axial begrenzende Wandteile 51 überstehen, befinden sich die Kabelbinder 49 beidseits neben dem Haltekörper 17.

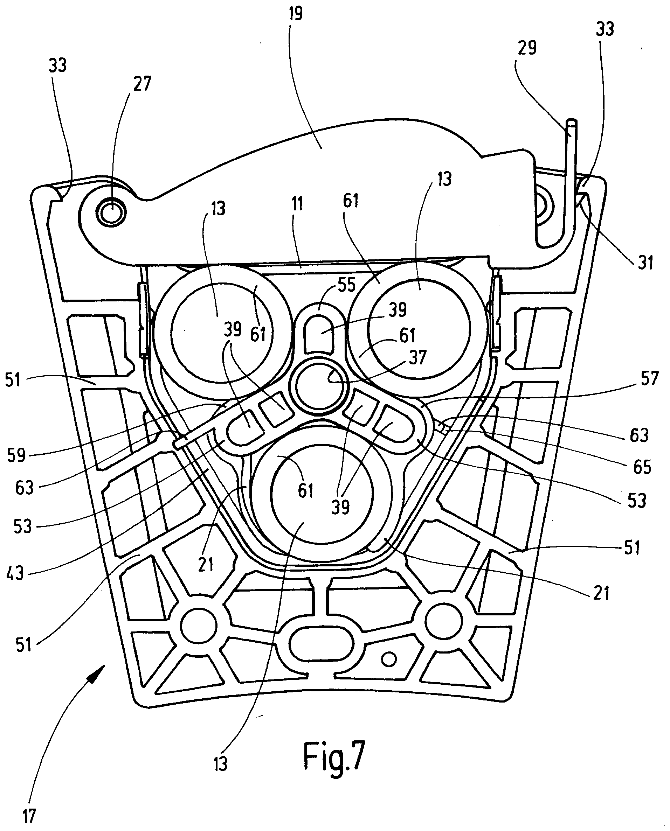

Die Fig. 7 bis 10 zeigen ein weiteres Ausführungsbeispiel des Abstandskörpers 15, das sich von den zuvor beschriebenen Beispielen dadurch unterscheidet, dass zwei Anlagestege 53 mit einer den Anlagestegen 25 der vorherigen Beispiele entsprechenden Länge und ein kürzerer Anlagesteg 55 vorgesehen sind. Die Anlagestege 53 weisen, wie zuvor, jeweils zwei Hohlräume 39 als durchgehende Luftführungen auf, während der kürzere Anlagesteg 55 lediglich einen Hohlraum 39 enthält. Ein weiterer Unterschied besteht darin, dass die Außenseite des Abstandskörpers 15 von zwei Rippenzügen 57 und 59 umgeben ist. Beide Rippenzüge 57, 59 beginnen im Muldengrund 45 der Abstandshalteflächen 35 zwischen den längeren Anlagestegen 53. Wie Fig. 8 zeigt, sind die Rippenzüge 57, 59 in gleicher Weise zueinander axial versetzt wie die nachgiebigen Zungen 21. Vom Muldengrund 45 ausgehend erstreckt sich der Rippenzug 59 in Fig. 9 nach links zur Innenseite der nachgiebigen Zunge 21, über die Außenseite der Zunge 21 weiter zum Rundbogen 41 des Anlagestegs 53 und über diesen hinweg bis zum kürzeren Anlagesteg 55, wo er am Rundbogen 41 endet. Der rechtsseitige Rippenzug 57 erstreckt sich in gleicher Weise bis zum Rundbogen 41 des kürzeren Anlagesteges 55. Im Montagezustand sind, wie in Fig. 7 gezeigt, die Stromkabel 13 mit ihrer Umhüllung 61 durch die Rippenzüge 57, 59 kontaktiert, wodurch sich bessere Halteeigenschaften ergeben, verglichen mit einer glatten Anlagefläche. Wegen der axialen Versetzung der Rippenzüge 57, 59 können diese auch ein axiales Fixiermittel für den Abstandskörper 15 durch formschlüssigen Eingriff mit einer im Aufnahmeraum 7 des zugeordneten Haltekörpers 17 befindlichen Rippe 43 bilden.

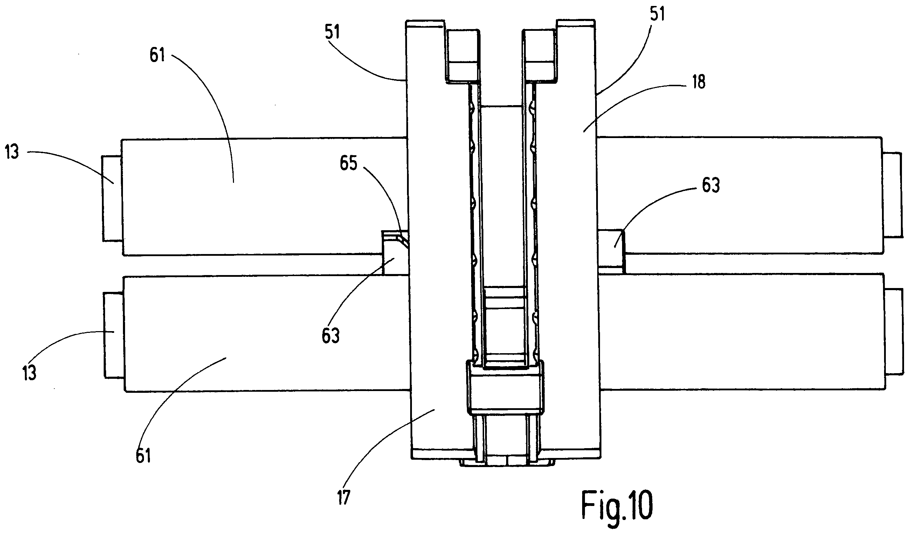

Als weiterer Unterschied zu den zuvor beschriebenen Ausführungsformen weist der Abstandskörper 15 beim Beispiel von Fig. 7 bis 10 als axiales Fixiermittel radiale Vorsprünge 63 auf, die an den axial außenliegenden Enden der längeren Anlagestege 53 als Verlängerung der Abstandshaltefläche 35 in zwei zueinander entgegengesetzte Richtungen vorspringen. Jeder Vorsprung 63 weist eine innere Schrägfläche 65 auf, die beim Montagevorgang, wie in Fig. 7 und 10 gezeigt, am äußeren Wandteil 51 des betreffenden Haltekörpers 17 für die formschlüssige Axialfixierung des Abstandskörpers 15 zur Anlage kommt.

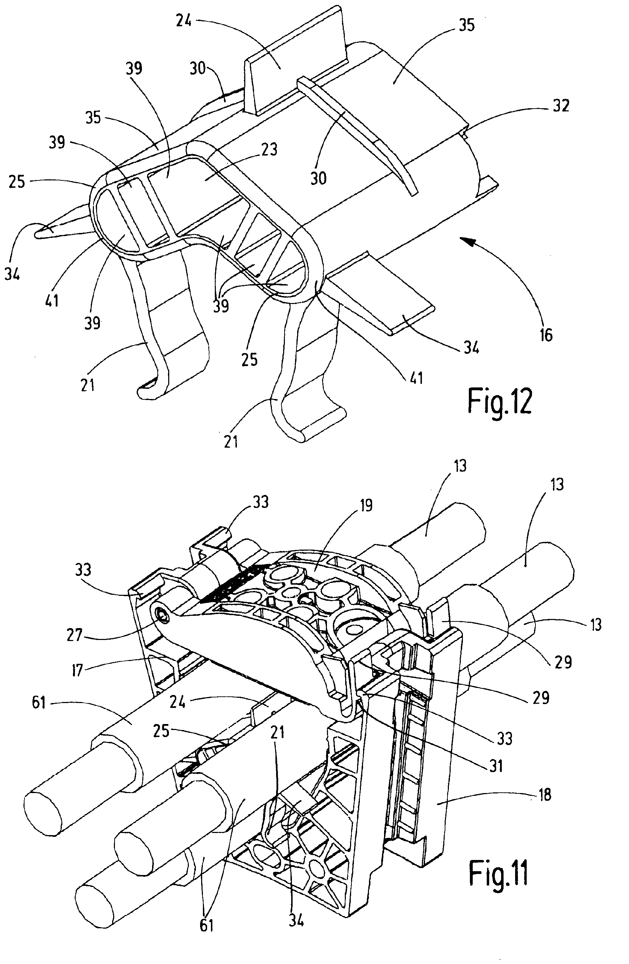

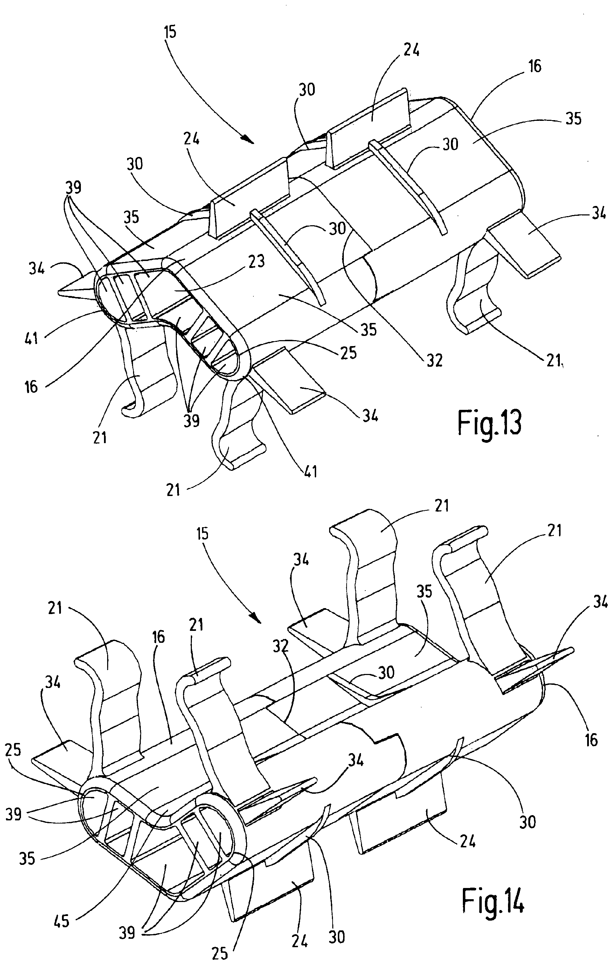

Die Fig. 11 bis 14 zeigen ein abgewandeltes Ausführungsbeispiel des Abstandskörpers 15, der aus zwei Teilkörpern 16 besteht, die als Gleichteile ausgebildet sind und von denen in Fig. 12 ein Teilkörper 16 einzeln dargestellt ist, während die Fig. 13 und 14 den aus den Teilkörpern 16 zusammengesetzten Abstandskörper 15 zeigen. Wie die Fig. 12 am deutlichsten zeigt, besitzen die Teilkörper 16 eine Querschnittsform mit zwei Anlagestegen 25, die mit einem eingeschlossenen Winkel von 120° vom Zentralteil 23 auseinanderstreben, und wie die Anlagestege 25 der zuvor gezeigten Beispiele in Rundbögen 41 enden. Anstelle eines dritten Anlagesteges weisen die Teilkörper 16 eine radial vorstehende Platte 24 auf, die sich mittig gelegen über die halbe axiale Länge des Teilkörpers 16 erstreckt. An die Platte 24 seitlich anschließend bilden die Anlagestege 25 äußere Abstandshalteflächen 35. Die an der anderen Seite der Anlagestege 25 befindlichen Abstandshalteflächen 35 laufen, wie zuvor (siehe Fig. 8 und 9), in einem Muldengrund 45 zusammen, siehe Fig. 14. In ähnlicher Weise wie zuvor beschrieben, sind an den Abstandshalteflächen 35 radial vorspringende Rippen 30 vorgesehen, die sich zur Achse senkrecht erstrecken, jedoch, anders als die Rippen 57 und 59 von Fig. 8 und 9, nicht über die Rundbögen 41 hinweg verlaufen.

Jeder Teilkörper 16 weist ein Paar Haltezungen 21 auf. Diese befinden sich an demjenigen Ende der Teilkörper 16, das dem Anlagebereich 32 entgegengesetzt ist, an dem die Teilkörper 16 zur Bildung des Abstandskörpers 15 aneinanderliegen. Dabei erstrecken sich die Haltezungen 21 von dem an den Rundbogen 41 angrenzenden Bereich der Anlagestege 25 von der Kuppe der Rundbögen 41 weg. Mit den Haltezungen 21 fluchtend sind radial vorstehende Flügelteile 34 gebildet, die sich radial erstrecken und beim Montagezustand des Abstandskörpers 15 im Aufnahmeraum 7 des jeweiligen Haltekörpers 17 als Fixiermittel den Rand des jeweiligen Aufnahmeraums 7 übergreifen, siehe Fig. 11.

Wie die Fig. 12 bis 14 zeigen, verläuft der Anlagebereich 32 nicht geradlinig, sondern in gestuftem Verlauf, so dass bei Aneinanderliegen der Teilkörper 16 eine Art formschlüssige Verzahnung gebildet ist, wie dies insbesondere aus Fig. 14 ersichtlich ist.

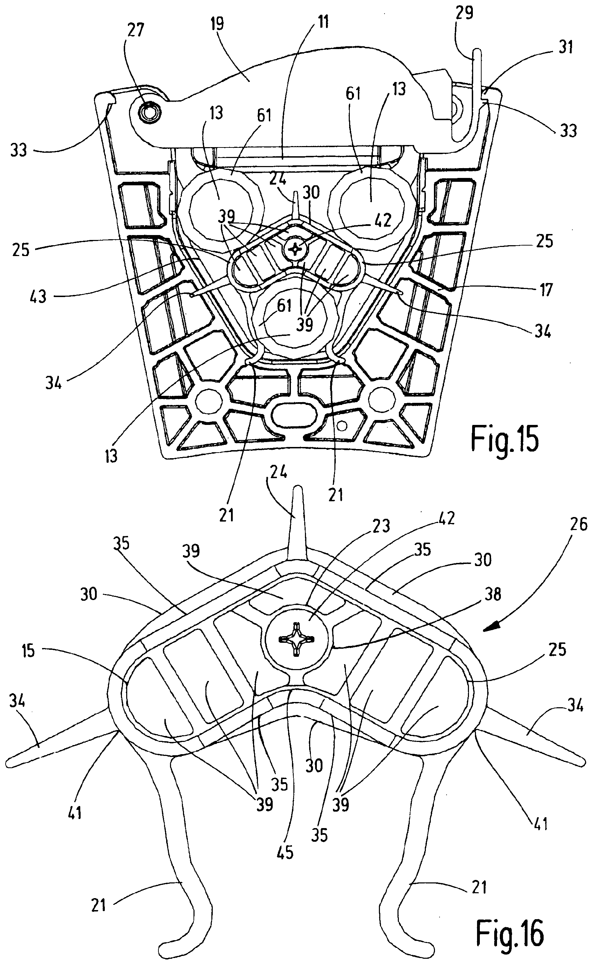

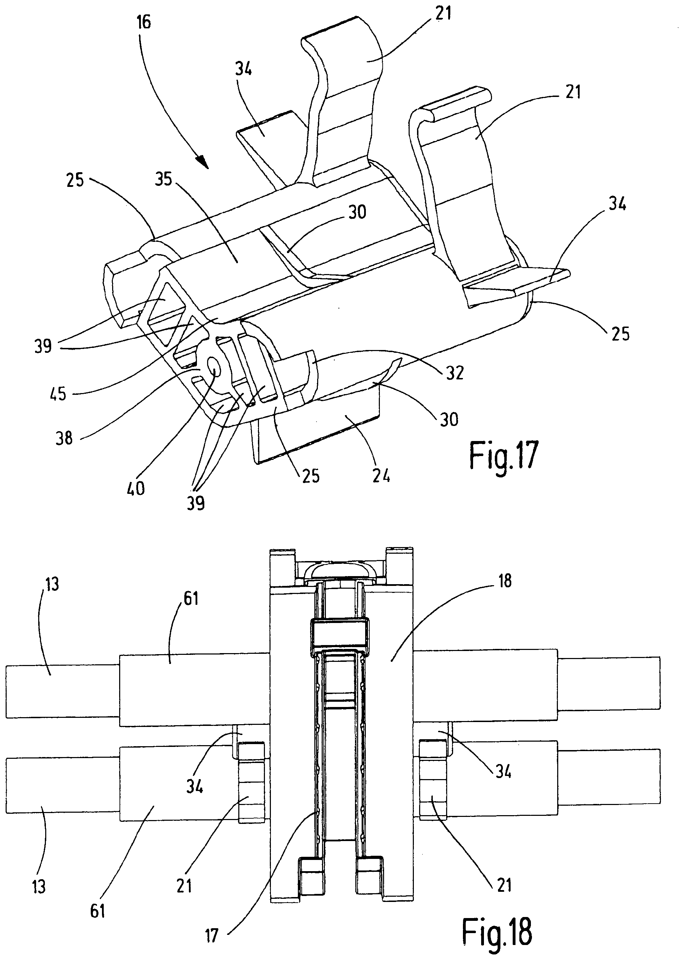

Die Fig. 15 bis 18 zeigen ein weiteres Ausführungsbeispiel eines aus zwei Teilkörpern 16 bestehenden Abstandskörpers 15. Wie die Fig. 15 und 16 zeigen, haben die Teilkörper 16 die gleiche Querschnittsform wie beim zuvor beschriebenen Beispiel und auch im Übrigen die gleiche Außenform. Wie es in Fig. 11 gezeigt ist, übergreifen auch bei diesem Ausführungsbeispiel bei dem in Fig. 15 gezeigten Montagezustand die vorstehenden Flügelteile 34 den Rand des Aufnahmeraums 7 im Haltekörper 17. Der einzige Unterschied gegenüber dem zuvor beschriebenen Beispiel besteht darin, dass die Teilkörper 16 mittels einer Schraubverbindung aneinander befestigt sind. Wie am deutlichsten aus Fig. 17 ersichtlich ist, ist im Zentralteil 23 ein Hülsenkörper 38 mit einer Bohrung 40 ausgebildet. Diese dient als Schraubenloch zur Bildung einer Verschraubung der Teilkörper 16 mittels einer Senkkopfschraube 42. Da die Flügelteile 34 mit den Haltezungen 21 fluchten, befinden sich beim Montagezustand auch die Haltezungen 21, ebenso wie die Flügelteile 34, außerhalb des Haltekörpers 17, siehe Fig. 11, 15 und 18.

## Patentansprüche

1. Befestigungssystem für energieführende Leitungen (13), insbesondere Stromkabel bei Windkraftanlagen, mit einer Trägerstruktur und mindestens einem daran festlegbaren Haltekörper (17), der eine Strangdurchführung mit einem muldenförmigen Aufnahmeraum (7) aufweist und mit seinen Wandteilen Anlageflächen für durch die Strangdurchführung geführte Leitungen (13) bildet, **dadurch gekennzeichnet, dass** der jeweilige Haltekörper (17) mit einer Abstandshalteeinrichtung ausgerüstet ist mit mindestens einem Abstandskörper (15), der eine dreiflügelige Grund-Querschnittsform aufweist und zwischen den Leitungen (13) im jeweiligen Aufnahmeraum (7) zentral angeordnet mittels Anlagestegen (25; 53, 55) die energieführenden Leitungen (13) in vorgegebenen Abständen voneinander hält, und mit mindestens einer Halteeinrichtung (21; 49) zum Festlegen des jeweiligen Abstandskörpers (15) an einer der genannten Leitungen (13).

2. Befestigungssystem nach Anspruch 1, **dadurch gekennzeichnet, dass** der jeweilige Abstandskörper (15) eine wärmeabführende Einrichtung (37, 39) aufweist.

3. Befestigungssystem nach Anspruch 1 oder 2, **dadurch gekennzeichnet, dass** im jeweiligen Abstandskörper (15) mindestens ein eine Luftführung bildender, in Axialrichtung der anliegenden Leitungen (13) durchgehender Hohlraum (37, 39) vorgesehen ist.

4. Befestigungssystem nach einem der vorstehenden Ansprüche, **dadurch gekennzeichnet, dass** der Abstandskörper (15) Anlagestege (25; 53, 55) aufweist, die sich von einem Zentralteil (23) in radialer Richtung im Winkel zueinander erstrecken und in denen zumindest ein Hohlraum (39) eine in Axialrichtung der anliegenden Leitungen (13) verlaufende Luftführung bildet.

5. Befestigungssystem nach Anspruch 4, **dadurch gekennzeichnet, dass** der Zentralteil (23) des Abstandskörpers (15) die Form eines runden, eine axiale Luftführung (37) bildenden Rohrkörpers besitzt.

6. Befestigungssystem nach einem der vorstehenden Ansprüche, **dadurch gekennzeichnet, dass** drei im Winkel von je 120° zueinander verlaufende Anlagestege (25; 53, 55) mit je einem oder zwei, Luftführungen bildenden Hohlräumen (39) vorgesehen sind.

7. Befestigungssystem nach Anspruch 6, **dadurch gekennzeichnet, dass** zwei Anlagestege (53) mit jeweils zwei Hohlräumen (39) und ein dritter (55), radial kürzerer, mit einem Hohlraum (39) vorgesehen sind.

8. Befestigungssystem nach einem der vorstehenden Ansprüche, **dadurch gekennzeichnet, dass** die Halteeinrichtung zur Bildung einer Clipsverbindung mit einer Leitung (13) nachgiebige Zungen (21) aufweist, die von entgegengesetzten Randbereichen von an den Anlagestegen (25; 53, 55) gebildeten Abstandshalteflächen (35) weg derart vorspringen, dass sie eine eingeclipste Leitung (13) teilweise umgreifen.

9. Befestigungssystem nach Anspruch 8, **dadurch gekennzeichnet, dass** die nachgiebigen Zungen (21) zueinander axial versetzt sind.

10. Befestigungssystem nach einem der Ansprüche 4 bis 9, **dadurch gekennzeichnet, dass** die an den Anlagestegen (25; 53, 55) gebildeten muldenartigen Abstandshalteflächen (35) in dem an den rohrförmigen Zentralteil (23) angrenzenden Muldengrund (45) endseits axiale Vorsprünge (47) aufweisen, und dass die Halteeinrichtung rohrschellenartige Spannbänder, vorzugsweise Kabelbinder (49), aufweist, die über zwei einander entgegengesetzte Vorsprünge (47) des Abstandskörpers (15) und über eine betreffende Leitung (13) geführt sind.

11. Befestigungssystem nach einem der vorstehenden Ansprüche, **dadurch gekennzeichnet, dass** am Abstandskörper (15) Fixiermittel (21; 57, 59; 63, 65) zur Bildung einer Sicherung gegen Axialverschiebung relativ zum jeweiligen Haltekörper (17) vorgesehen sind, das zur Festlegung energieführender Leitungen (13) Strangdurchführungen (7) aufweist, in denen der betreffende Abstandskörper (15) angeordnet ist.

12. Befestigungssystem nach Anspruch 11, **dadurch gekennzeichnet, dass** als Fixiermittel Fortsätze (63, 65) vorgesehen sind, die von einander axial entgegengesetzten Enden muldenartiger Abstandshalteflächen (35) radial vorspringen und mit einander axial entgegengesetzten Wandteilen (51) einer zugeordneten Strangdurchführung (7) des jeweiligen Haltekörpers (17) in formschlüssigen Sicherungseingriff kommen.

13. Befestigungssystem nach einem der vorstehenden Ansprüche, **dadurch gekennzeichnet, dass** an den Abstandshalteflächen (35) der Anlagestege (25; 53, 55) des Abstandskörpers (15) radial vorstehende Rippen (57, 59) für die Anlage an einer Umhüllung (61) der Stromkabel (13) und/oder für einen Formschluss mit entsprechenden Rippen (43) an der Wand einer betreffenden Strangdurchführung (7) eines zugeordneten Haltekörpers (17) vorgesehen sind.

14. Befestigungssystem nach einem der vorstehenden Ansprüche, **dadurch gekennzeichnet, dass** der Abstandskörper (15) aus zumindest zwei, sich in Axialrichtung aneinander anschließenden Teilkörpern (16) zusammengesetzt ist.

15. Befestigungssystem nach Anspruch 14, **dadurch gekennzeichnet, dass** die Teilkörper (16) als Gleichteile ausgebildet sind, die an einem gestuften Anlagebereich (32) aneinander anliegen.

16. Befestigungssystem nach Anspruch 14 oder 15, **dadurch gekennzeichnet, dass** an beiden, dem Anlagebereich (32) entgegengesetzten Enden jedes Teilkörpers (16) Haltezungen (21) der Halteeinrichtung vorgesehen sind.

17. Befestigungssystem nach Anspruch 8 und einem der Ansprüche 11 bis 16, **dadurch gekennzeichnet, dass** als Fixiermittel zur Sicherung gegen Axialverschiebung Flügelteile (34) vorgesehen sind, die, zu den Haltezungen (21) fluchtend, von den Rundbögen (41) der Anlagestege (25) radial vorspringen.

18. Befestigungssystem nach Anspruch 4 und einem der Ansprüche 14 bis 17, **dadurch gekennzeichnet, dass** im Zentralbereich (23) zwischen den Anlagestegen (25) ein Hülsenkörper (38) mit einer Bohrung (40) für eine die Teilkörper (16) aneinanderhaltende Verbindungsschraube (42) gebildet ist.

19. Befestigungssystem nach einem der vorhergehenden Ansprüche, **dadurch gekennzeichnet, dass** die Trägerstruktur in der Art eines Sternkörpers gebildet ist, und dass an den Wandteilen des Aufnahmeraums (7) mindestens eine vorstehende Rippe (43) vorgesehen ist, die sich zur Längsachse der betreffenden Leitungen (13) senkrecht erstreckt.

## Claims

1. A fastening system for energy-carrying lines (13), in particular electricity cables in wind energy plants, with a support structure and at least one holding body (17) which can be fixed firmly thereto, which body has a cable guide with a trough-shaped receiving space (7), and forms, with wall parts thereof, bearing surfaces for lines (13) guided through the cable guide, **characterised in that** the respective holding body (17) is equipped with a spacer device with at least one spacing body (15) which has a three-leaf basic cross-sectional form and, arranged centrally between the lines (13) in the respective receiving space (7) by means of bearing webs (25; 53, 55), keeps the energy-carrying lines (13) at predetermined distances from one another, and with at least one holding device (21; 49) for fixing the respective spacing body (15) to one of the said lines (13).

2. The fastening system according to claim 1, **characterised in that** the respective spacing body (15) has a heat dissipating device (37, 39).

3. The fastening system according to claim 1 or 2, **characterised in that**, in the respective spacing body (15), at least one cavity (37, 39), forming an air duct and continuing in axial direction of the adjacent lines (13), is provided.

4. The fastening system according to one of the preceding claims, **characterised in that** the spacing body (15) has bearing webs (25; 53, 55) which extend from a central part (23) in radial direction at an angle towards one another, and in which forms, at least in cavity (39), an air duct travelling in axial direction of the adjacent lines (13).

5. The fastening system according to claim 4, **characterised in that** the central part (23) of the spacing body (15) has the form of a round tubular body forming an axial air duct (37).

6. The fastening system according to one of the preceding claims, **characterised in that** three bearing webs (25; 53, 55) each at an angle of 120° towards one another are each provided with one or two cavities (39) forming air ducts.

7. The fastening system according to claim 6, **characterised in that** two bearing webs (53) are each provided with two cavities (39) and a third (55), radially shorter, is provided with one cavity (39).

8. The fastening system according to one of the preceding claims, **characterised in that** the holding device has flexible tongues (21) for forming a clip connection with a line (13), which tongues project away from opposing edge regions of spacer bearing surfaces (35) formed on the bearing webs (25; 53, 55) such that they partially surround a clipped-in line (13).

9. The fastening system according to claim 8, **characterised in that** the flexible tongues (21) are axially offset from one another.

10. The fastening system according to one of claims 4 to 9, **characterised in that** the trough-shaped spacer bearing surfaces (35) formed on the bearing webs (25; 53, 55) have, in the base of the trough (45) abutting the tubular central part (23), axial projections (47) at the end, and that the holding device has tension bands in the form of pipe brackets, preferably cable ties (49) which are guided over two opposing projections (47) of the spacing body (15) and over a respective line (13).

11. The fastening system according to one of the preceding claims, **characterised in that** fixing means (21; 57, 59; 63, 65) are provided on the spacing body (15) for forming a safety device against axial displacement relative to the respective holding body (17), which means have cable guides (7) for establishing energy-carrying lines (13), in which guides the respective spacing body (15) is arranged.

12. The fastening system according to claim 11, **characterised in that** extensions (63, 65) are provided as fixing means, which extensions project radially from axially opposing ends of trough-shaped spacer bearing surfaces (35) and come into form-locking, securing engagement with axially opposing wall parts (51) of an associated cable guide (7) of the respective holding body (17).

13. The fastening system according to one of the preceding claims, **characterised in that**, on the spacer bearing surfaces (35) of the bearing webs (25; 53, 55) of the spacing body (15), radially projecting ribs (57, 59) are provided for abutting a cover (61) of the electricity cable (13) and/or for form-locking with corresponding ribs (43) at the wall of a respective cable guide (7) of an associated holding body (17).

14. The fastening system according to one of the preceding claims, **characterised in that** the spacing body (15) is composed of at least two partial bodies (16), connecting to one another in axial direction.

15. The fastening system according to claim 14, **characterised in that** the partial bodies (16) are designed as common parts which abut against one another at a stepped bearing region (32).

16. The fastening system according to claim 14 or 15, **characterised in that** holding tongues (21) of the holding device are provided at both ends of each partial body (16), which ends are opposite the bearing region (32).

17. The fastening system according to claim 8 and one of claims 11 to 16, **characterised in that** wing parts (34) are provided as fixing means for securing against axial displacement, which parts project, radially flush to the holding tongues (21), from the round arches (41) of the bearing webs (25).

18. The fastening system according to claim 4 and one of claims 14 to 17, **characterised in that**, in the central region (23) between the bearing webs (25), a sleeve body (38) is formed with a bore (40) for a connecting screw (42) holding the partial bodies (16) to one another.

19. The fastening system according to one of the preceding claims, **characterised in that** the support structure is formed in the shape of a star polyhedron, and that at least one projecting rib (43) is provided at the wall parts of the receiving space (7), which rib extends perpendicular to the longitudinal axis of the respective lines (13).

## Revendications

1. Système de fixation de lignes (13) de transport d'énergie, notamment de câbles de courant dans des éoliennes, comprenant une structure de support et au moins un corps (17) de maintien, qui y est fixé, qui a un passage de câbles ayant un espace (7) de réception en forme de cuvette et qui forme, par ses parties de paroi, des surfaces de contact pour des lignes (13) passant dans le passage de câbles, **caractérisé en ce que** le corps (17) de maintien respectif est équipé d'un dispositif d'entretoisement ayant au moins un corps (15) d'entretoisement, qui a une forme de section transversale de base à trois ailes et qui, disposé de manière centrale entre les lignes (13) dans l'espace (7) de réception respectif, maintient, au moyen de réglettes (25 ;53,55) de contact, les lignes (13) de transport d'énergie à des distances données à l'avance, et comprenant au moins un dispositif (21 ;49) de maintien pour fixer le corps (15) d'entretoisement respectif à l'une desdites lignes (13).

2. Système de fixation suivant la revendication 1, **caractérisé en ce que** le corps (15) d'entretoisement respectif a un dispositif (37, 39) de dissipation de la chaleur.

3. Système de fixation suivant la revendication 1 ou 2, **caractérisé en ce qu'**il est prévu, dans le corps (15) d'entretoisement respectif, au moins une cavité (37, 39) formant une ventilation et continue dans la direction axiale des lignes (13) appliquées.

4. Système de fixation suivant l'une des revendications précédentes, **caractérisé en ce que** le corps (15) d'entretoisement a des réglettes (25 ; 53, 55) de contact, qui s'étendent, en faisant un angle entre elles, dans la direction radiale à partir d'une partie (23) centrale et dans lesquelles au moins une cavité (39) forme un passage pour de l'air s'étendant dans la direction axiale des lignes (13) appliquées.

5. Système de fixation suivant la revendication 4, **caractérisé en ce que** la partie (23) centrale du corps (15) d'entretoisement a la forme d'un corps tubulaire circulaire formant une ventilation (37) axiale.

6. Système de fixation suivant l'une des revendications précédentes, **caractérisé en ce qu'**il est prévu trois réglettes (25 ; 53, 55) de contact, qui font entre elles un angle de respectivement 120° et qui ont chacune une ou deux cavités (39) formant des ventilations.

7. Système de fixation suivant la revendication 6, **caractérisé en ce qu'**il est prévu deux réglettes (53) de contact ayant chacune deux cavités (39) et une troisième (55) plus courte radialement et ayant une cavité (39).

8. Système de fixation suivant l'une des revendications précédentes, **caractérisé en ce que** le dispositif de maintien a, pour former un clipsage avec une ligne (13), des languettes (21) cédant élastiquement, qui font saillie de parties de bord opposées de surfaces (35) d'entretoisement formées sur les réglettes (25 ; 53, 55) de contact, de manière à enserrer en partie une ligne (13) clipsée.

9. Système de fixation suivant la revendication 8, **caractérisé en ce que** les languettes (21) cédant élastiquement sont décalées axialement les unes par rapport aux autres.

10. Système de fixation suivant l'une des revendications 4 à 9, **caractérisé en ce que** les surfaces (35) d'entretoisement, formées sur les réglettes (25 ; 53, 55) de contact, ont, dans le fond (45) de cuvette voisin de la partie (23) centrale tubulaire, des saillies (47) axiales du côté de l'extrémité, et **en ce que** le dispositif de maintien a des colliers tendeurs de type colliers de tuyau, de préférence des jonctions de câbles, qui passent sur deux saillies (47) opposées l'une à l'autre du corps (15) d'entretoisement et sur une ligne (13) concernée.

11. Système de fixation suivant l'une des revendications précédentes, **caractérisé en ce qu'**il est prévu au corps (15) d'entretoisement des moyens (21 ; 57, 59 ; 63, 65) d'immobilisation pour former une fixation à l'encontre d'un déplacement axial par rapport au corps (17) de maintien respectif, qui a, pour fixer des lignes (13) de transport d'énergie, des passages (7) de câbles, dans lesquels le corps (15) d'entretoisement concerné est disposé.

12. Système de fixation suivant la revendication 11, **caractérisé en ce qu'**il est prévu, comme moyen d'immobilisation, des prolongements (63, 65), qui font saillie radialement d'extrémités opposées axialement l'une à l'autre de surfaces (35) d'entretoisement de type en cuvette et qui viennent en prise de fixation à complémentarité de forme avec des parties (51) de paroi opposées axialement l'une à l'autre d'un passage (7) associé de câbles du corps (17) de maintien respectif.

13. Système de fixation suivant l'une des revendications précédentes, **caractérisé en ce qu'**il est prévu, sur les surfaces (35) d'entretoisement des réglettes (25 ; 53, 55) de contact du corps (15) d'entretoisement, des nervures (57, 59) en saillie radialement pour l'application à une gaine (61) du câble (13) de courant et/ou pour une complémentarité de forme avec des nervures (43) correspondantes sur la paroi d'un passage (16) de câbles concerné d'un corps (17) de maintien associé.

14. Système de fixation suivant l'une des revendications précédentes, **caractérisé en ce que** le corps (15) d'entretoisement est composé d'au moins deux sous-corps (16) se raccordant l'un à l'autre dans la direction axiale.

15. Système de fixation suivant la revendication 14, **caractérisé en ce que** les sous-corps (16) sont constitués de parties pareilles, qui s'appliquent l'une à l'autre dans une région (32) d'application échelonnée.

16. Système de fixation suivant la revendication 14 ou 15, **caractérisé en ce que** des languettes (21) du dispositif de maintien sont prévues aux deux extrémités, opposées à la région (32) de contact, de chaque sous-corps (16).

17. Système de fixation suivant la revendication 8 et l'une des revendications 11 à 16, **caractérisé en ce qu'**il est prévu, comme moyen d'immobilisation pour empêcher un déplacement axial, des parties (34) formant ailes, qui, alignées avec les languettes (21) de maintien, font saillie radialement d'arceaux (41) circulaires des réglettes (25) de contact.

18. Système de fixation suivant la revendication 4 et l'une des revendications 14 à 17, **caractérisé en ce que**, dans la partie (23) centrale entre les réglettes (25) de contact, est formé un corps (38) formant douille, ayant un trou (40) pour une vis (42) de liaison maintenant l'un contre l'autre les sous-corps (16).

19. Système de fixation suivant l'une des revendications précédentes, **caractérisé en ce que** la structure de support est formée à la manière d'un corps en étoile et **en ce que**, sur les parties de paroi de l'espace (7) de réception, est prévue au moins une nervure (43) en saillie, qui s'étend perpendiculairement à l'axe longitudinal des lignes (13) concernées.
